# EUROPEAN PATENT APPLICATION

(11) **EP 3 363 880 A1**
(43) Date of publication of application: **22.08.2018**
(21) Application number: 16848753.6
(22) Date of filing: 25.05.2016
(51) Int. Cl.: C10L 5/14, C10L 5/36

(54) **COAL BRIQUETTES AND METHOD FOR MANUFACTURING SAME**

(30) Priority: 25.09.2015 KR 20150137116
(71) Applicant: Posco, Pohang-si, Gyeongsangbuk-do 37859 (KR)
(72) Inventor: KIM, Hyun Jong, Pohang-si Gyeongsangbuk-do 37859 (KR); KIM, Hong San, Pohang-si Gyeongsangbuk-do 37859 (KR); YI, Sang Ho, Pohang-si Gyeongsangbuk-do 37859 (KR); PARK, Seok In, Pohang-si Gyeongsangbuk-do 37859 (KR); CHOI, Moo Eob, Pohang-si Gyeongsangbuk-do 37859 (KR); PARK, Woo Il, Pohang-si Gyeongsangbuk-do 37859 (KR); CHO, Min Young, Pohang-si Gyeongsangbuk-do 37859 (KR)
(74) Representative: Zech, Stefan Markus
(86) International application number: PCT/KR2016/005536
(87) International publication number: WO 2017/052027

(57) **Abstract**

Provided are: coal briquettes to be rapidly heated by being charged in a dome part of a melting gasification furnace in an apparatus for manufacturing molten iron, the apparatus comprising the melting gasification furnace in which reduced iron is charged, and a reduction furnace connected to the melting gasification furnace and providing reduced iron; and a method for manufacturing same. The method for manufacturing coal briquettes comprises the steps of: providing fine coal; preparing a binder mixture by mixing starch, an acid aqueous solution and water; preparing a coal blend by mixing the fine powder and the binder mixture; and manufacturing coal briquettes by molding the coal blend.

## Description

### BACKGROUND OF THE INVENTION

### (a) Field of the Invention

Coal briquettes and methods for manufacturing the same are related. More particularly, coal briquettes and methods for manufacturing the same using bioplastics are related.

### (b) Description of the Related Art

In a reduced iron smelting method, iron ore is used in a reduction furnace and a melting gasification furnace that smelts reduced iron ore. When smelting iron ore in the melting gasification furnace, coal briquettes as a heat source to smelt the iron ore are charged to the melting gasification furnace. After reduced iron is smelted in the melting gasification furnace, the reduced iron is converted to molten iron and slag and is discharged to the outside. The coal briquettes that are charged to the melting gasification furnace form a coal-packed bed. Oxygen is injected through a tuyere that is installed in the melting gasification furnace such that the coal-packed bed is burned to generate a combustion gas. The combustion gas is converted to a reducing gas of a high temperature while moving upward through the coal-packed bed. The reducing gas of a high temperature is discharged to the outside of the melting gasification furnace to be supplied to a reduction furnace as a reducing gas.

Coal briquettes are manufactured by mixing coal and a binder. In this case, molasses is used as a binder. The components of the molasses vary depending on where it is sourced, and it is difficult to consistently control the ingredients according to a sugar manufacturing process. Therefore, in the case where a coal briquette is prepared by using molasses as a binder, it is difficult to control the quality of the coal briquette. Particularly, in the case of using high moisture molasses, there are problems in that the quality of the coal briquette is reduced.

### SUMMARY OF THE INVENTION

Coal briquettes using bio-plastics and a manufacturing method thereof are provided.

A method of manufacturing a coal briquette to be rapidly heated by being charged in a dome part of a melting gasification furnace in an apparatus for manufacturing molten iron, the apparatus comprising the melting gasification furnace in which reduced iron is charged and a reduction furnace connected to the melting gasification furnace and providing reduced iron according to an example embodiment of the present invention includes providing fine coal, preparing a binder mixture by mixing starch, an acid aqueous solution, and water; preparing a coal blend by mixing the fine powder and the binder mixture; and manufacturing coal briquettes by molding the coal blend.

In the step of preparing the binder mixture, 20 to 60 wt% of the starch, 0.01 to 1 wt% of the acid aqueous solution, and a balance of water based on 100 wt% of the binder mixture may be mixed. More specifically, 40 to 55 wt% of the starch, 0.01 to 0.5 wt% of the acid aqueous solution, and a balance of water may be mixed.

A concentration of the acid aqueous solution may be 1 to 10 wt%.

The acid aqueous solution may include one or more of citric acid, acetic acid, lactic acid, malic acid, tartaric acid, and ascorbic acid.

The binder mixture may have pH 3 to 6.

In the step of preparing the coal blend, 90 to 99 wt% of the fine coal and 1 to 10 wt% of the binder mixture based on 100 wt% of the coal blend may be mixed. Specifically, 95 to 98 wt% of the fine coal and 2 to 5 wt% of the binder mixture may be included.

The step of preparing the coal blend may be performed at a temperature of 55 to 200° C.

The step of preparing the coal blend may include a first mixing step at a temperature of 55 to 65° C and a second mixing step at a temperature of 65 to 200° C after the first mixing step.

The method may further include drying coal briquette at 100 to 200° C for 10 to 20 minutes after preparing the coal briquette.

The coal briquette according to an example embodiment of the present invention includes 1 to 10 wt% of a bio-plastic, 3 to 15 wt% of moisture, and a balance of coal, and the bio-plastic consists of 40 wt% or less of amylopectin and 60 wt% or greater of amylose.

3.5 to 5 wt% of the bio-plastic, 5 to 10 wt% of the moisture, and a balance of the coal may be included.

The bio-plastic may consist of 25 to 35 wt% of amylopectin and 65 to 75 wt% of the amylose.

Coal briquettes having excellent strength may be manufactured.

Since there is no K component in the binder, a pipeline clogging does not occur.

Since quicklime or slaked lime is not used, CO₂ reactivity is deteriorated, and thus fuel efficiency of coal is improved.

Since a bending ratio of the binder is minimized, economic feasibility of the binder is improved compared with a conventional binder.

### BRIEF DESCRIPTION OF THE DRAWINGS

FIG. 1 is a schematic flowchart showing a method for manufacturing coal briquettes according to an example embodiment of the present invention.
FIG. 2 is a view showing a conversion of amylopectin into amylose and a formation principle of starch and a bio-plastic.
FIG. 3 is a schematic view of a coal briquette manufacturing apparatus according to an example embodiment of the present invention.
FIG. 4 is a schematic view of an apparatus for manufacturing molten iron using the coal briquettes of FIG. 1.
FIG. 5 is a schematic view of another molten iron manufacturing using the coal briquettes of FIG. 1.
FIG. 6 is a result showing a viscoelasticity measurement result obtained in Example 1.
FIG. 7 is a result showing a viscoelasticity measurement result obtained tested in Example 2.

### DETAILED DESCRIPTION OF THE EMBODIMENTS

Terms such as first, second, and third are used to illustrate various portions, components, regions, layers, and/or sections, but not to limit them. These terms are used to discriminate the portions, components, regions, layers, or sections from other portions, components, regions, layers, or sections. Therefore, a first portion, component, region, layer, or section as described below may be a second portion, component, region, layer, or section within the scope of the present invention.

It is to be understood that the terminology used therein is only for the purpose of describing particular embodiments and is not intended to be limiting. It must be noted that, as used in the specification and the appended claims, the singular forms include plural references unless the context clearly dictates otherwise. It will be further understood that the terms "comprises" and/or "comprising," when used in this specification, specify the presence of stated properties, regions, integers, steps, operations, elements, and/or components, but do not preclude the presence or addition of one or more other properties, regions, integers, steps, operations, elements, and/or components thereof.

Unless it is mentioned otherwise, all terms including technical terms and scientific terms used herein have the same meaning as the meaning generally understood by a person with ordinary skill in the art to which the present invention belongs. The terminologies that are defined previously are further understood to have the meanings that coincide with related technical documents and the contents that are currently disclosed, but are not to be interpreted as having ideal or very official meanings unless defined otherwise.

The present invention will be described more fully hereinafter with reference to the accompanying drawings, in which example embodiments of the invention are shown. As those skilled in the art would realize, the described embodiments may be modified in various different ways, all without departing from the spirit or scope of the present invention.

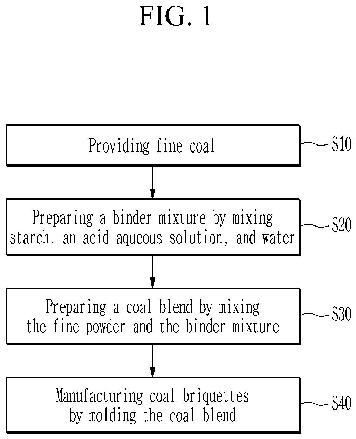

FIG. 1 schematically illustrates a flowchart of a method for manufacturing coal briquettes according to an example embodiment of the present invention. The flowchart of the method for manufacturing coal briquettes of FIG. 1 is an exemplary flowchart, and the present invention is not limited thereto. Thus, the manufacturing method of coal briquettes may be variously modified.

As shown in FIG. 1, the method of manufacturing a coal briquette includes providing fine coal (S10), preparing a binder mixture by mixing starch, an acid aqueous solution, and water (S20), preparing a coal blend by mixing the fine powder and the binder mixture (S30), and manufacturing coal briquettes by molding the coal blend (S40). In addition, the method of manufacturing the coal briquette may further include other steps as needed.

First, in the step (S10), fine coal is provided. Herein, the fine coal is prepared by pulverizing coal, and the coal is in general classified into peat including about 60 % of carbon powder, ignite and brown coal including about 70 % of carbon powder, pitch coal including about 70 % to 80 % of carbon powder, bituminous coal including about 80 % to 90 % of carbon powder, and hard coal including 90 % of carbon powder depending on a carbonization degree. Herein, a kind of coal is not particularly limited, but a single kind of coal or a mixture of various coals may be used. It is preferable to use fine coal having a uniform particle diameter in order to reduce a deviation of quality and specifically, fine coal having a particle diameter distribution of greater than or equal to 80 wt% of a particle having a diameter ranging from less than or equal to 3 mm and more specifically, greater than or equal to 90 wt% of a particle having a diameter ranging from less than or equal to 5 mm.

Subsequently, in the step (S20), starch, an acid aqueous solution, and water are mixed to prepare a binder mixture. According to an example embodiment of the present invention, a mixture obtained by directly mixing an already manufactured bio-plastic with fine coal is not applied as a binder of a coal briquette, but starch, an acid aqueous solution, and water as a raw material for a bio-plastic are mixed to obtain the binder mixture, and then, the binder mixture is mixed with fine coal in a subsequent step (S30) and the like and simultaneously synthesized into a bio-plastic and accordingly, plays role of a coal briquette binder. When the already manufactured bio-plastic is directly mixed with the fine coal, the bio-plastic may not be smoothly coated on the surface of the fine coal and thus needs to be remelt at a high temperature. Herein, the remelt bio-plastic has low elastic recovery and thus deteriorates an immediate strength of a coal briquette. On the contrary, an example embodiment of the present invention, since the binder mixture is prepared by mixing starch, an acid aqueous solution, and water as a raw material and then, used to synthesize a bio-plastic in a subsequent step (S30) and the like, the bio-plastic is smoothly coated on the surface of fine coal, and in addition, an immediate strength of a coal briquette may be improved.

The starch consists of 20 to 30 wt% of amylase and 70 to 80 wt% of amylopectin. The amylase has a linear helix structure and thus is elastic and accordingly, may be effectively coated on a medium. In addition, the amylase is coated with high density and thus every efficient as a binder. However, the amylopectin has a branch structure and thus is hard and accordingly, may not be effectively coated on a material for binding. In addition, since the branch structure has low density compared with the linear structure, a coal briquette has a weak binding strength at a binder part after binding and thus is vulnerable to deformation due to an external pressure and lacks of viscoelasticity. In an example embodiment of the present invention, when the starch is synthesized into a bio-plastic in the step (S30) and the like, the amylose structure, which is advantageous as a binder, is increased, but the amylopectin structure is decreased, and thus hot and cool strengths of a coal briquette is improved.

The starch may be mixed in an amount of 20 to 60 wt% based on 100 wt% of the binder mixture. When the starch is included in too large an amount, the starch may not be uniformly mixed with the acid aqueous solution. When the starch is included in too small an amount, a binding effect may be insignificant. Accordingly, a mixing amount of the starch may be adjusted within the above range. Specifically, the starch may be included in an amount of 40 to 55 wt% based on 100 wt% of the binder mixture.

The acid aqueous solution plays a role of transforming the starch into a bio-plastic in the step (S30) and the like. The acid aqueous solution includes acid and water. The acid may be at least one kind selected from citric acid, acetic acid, lactic acid, malic acid, tartaric acid, and ascorbic acid.

A concentration of the acid aqueous solution may be 1 to 10 wt%.

The acid aqueous solution may be mixed in an amount of 0.01 to 1 wt% and specifically, 0.01 to 0.5 wt% based on 100 wt% of a binder mixture. Water may be used as a balance.

The binder mixture may have pH ranging from 3 to 6. When the binder mixture has high pH, a bio-plastic may not have appropriate viscoelasticity. When pH of the binder mixture is too low, viscoelasticity of a bio-plastic becomes lower, and in addition, an equipment may be corroded. Accordingly, pH of the binder mixture may be adjusted within the above range. Specifically, pH of the binder mixture may be in a range of 4 to 5.

The step (S20) may be performed at a temperature ranging from 5 to 50 ° C. As the temperature is higher, the starch may be transformed into a bio-plastic before mixed with a fine coal in a subsequent step (S30).

The aforementioned steps (S10 and S20) may be performed in order of S20 and S10 separately or simultaneously.

Referring to FIG. 1 again, the fine coal and the binder mixture are mixed to prepare a coal blend in the step (S30).

90 to 99 wt% of the fine coal and 1 to 10 wt% of the binder mixture may be mixed based on 100 wt% of the coal blend. When the binder mixture is mixed in too small an amount, a strength of a coal briquette may be deteriorated. When the binder mixture is mixed in too large an amount, there is a limit in improving the strength of a coal briquette, and moisture in the binder may deteriorate quality of a coal briquette. Accordingly, a mixing amount of the binder mixture may be adjusted within the above range. Specifically, 95 to 98 wt% of the fine coal and 2 to 5 wt% of the binder mixture may be mixed based on 100 wt% of the coal blend.

The step (S30) may be performed at a temperature ranging from 55 to 200 ° C. When the step S30 is performed at an appropriate temperature, the starch may be transformed into a bio-plastic.

The transformation mechanism of the starch into the bio-plastic is specifically illustrated.

Amylose and amylopectin in the starch have a crystal structure. The amylase has a linear structure, and the amylopectin has a structure having a branch at the amylose structure. When heat is applied to the amylose and amylopectin, and water is added thereto, the water is permeated into the crystal structure. The water may rarely be permeated among crystals at a room temperature. The water permeated among the crystals binds the amylase and the amylopectin through a hydrogen bonding. The amylopectin is cut by acid and formed into amylose. When the water is permeated into an amylase crystalline gap, the hydrogen bonding occurs, an OH group, a hydrophilic group, becomes outward but a C-C bonding, a hydrophobic group, becomes inward due to an interaction of the hydrophilic group and the hydrophobic group, and thus the amylase and the amylopectin are transformed into a helix structure. In addition, a double helix structure based on polar lipid in the starch is formed through a bonding with the polar lipid in the starch. The other helixes not bonded with the polar lipid are bonded themselves and also form a double helix structure. The amylase is shared in the double helix and forms a crystal structure when water is discharged.

A conversion mechanism of amylopectin into amylase is as follows. The amylase consists of glucose through alpha 1,4-bonding. The amylopectin has a back-bone structure of having a main back-bone of 1,4-bonding and a branch connected to the main back-bone through alpha 1,6-bonding.

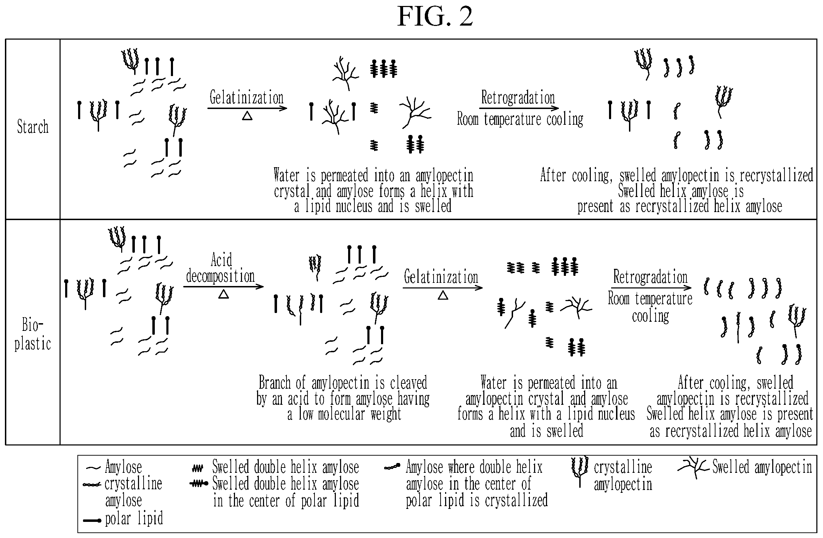

FIG. 2 shows a conversion of amylopectin into amylose and a formation principle of starch and a bio-plastic.

Alpha 1,4-bonding is not cut, but α - 1,6-bonding is cut between PH 4 to 5 and at temperature of greater than or equal to 50 ° C. Accordingly, the α - 1,6-bonding may be selectively possible under presence of acid. Accordingly, the branch of the amylopectin may be cut into a linear, which is similar to the amylase.

Through such a process, a bio-plastic consisting 60 wt% or less of amylopectin and 40 wt% or greater of amylose may be synthesized. More specifically, the bio-plastic may consist of 25 to 35 wt% of the amylopectin and 65 to 75 wt% of the amylose. The bio-plastic has relatively high density and thus increases a strength of a coal briquette, and in addition, since linear molecules form a helix structure, the bio-plastic may be effectively adhered on the surface of fine coal.

Table 1 shows a chemical structure and properties of the amylopectin and the amylose.

**(Table 1)**

| Component | Amylopectin | Amylose |
|---|---|---|
| Chemical structure | 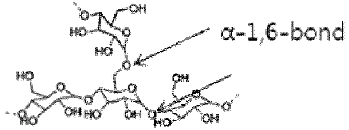 | 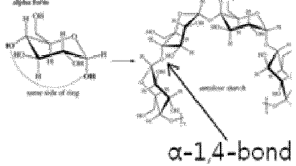 |
| Macro -structure | 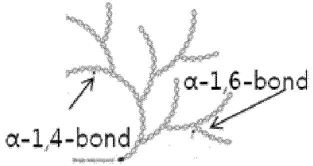 | 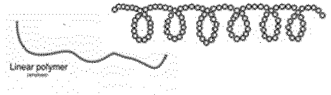 |
| Binder-related properties | Gallized and unfavorable as a binder Weak strength due to low density High cohesion performance and low adhesion performance | Increased strength due to low density Linear molecule forms a helix structure by hydrophilicity and hydrophobicity → Effective cohesion to coal surface |
| Modificatio n principle | α - 1,6-bond of amylopectin forms a geometry that is easier to be decomposed than α - 1,4-bond → branch removal by pH 4-5 α - 1,6-bond cleavage → modified into amylose | |

The step (S30) may include a first mixing step performed at 55 to 65 ° C and a second step performed at 65 to 200 ° C after the first mixing step.

Referring to FIG. 1 again, the fine coal and the binder mixture may be mixed to prepare a coal blend in the step (S40).

As not shown in FIG. 1, the coal blend is inserted between a pair of rolls spinning in an opposite direction each other to prepare a coal briquette having a pocket or strip shape. As a result, a coal briquette having excellent hot and cold strengths may be prepared.

After the step (S40), a step of drying the coal briquette at 100 to 200 ° C for 10 to 20 minutes may be further included. When the drying step is further included, an amount of moisture may be adjusted to be in a range of 3 to 15 wt% based on 100 wt% of the coal briquette. Within the above range, a strength of the coal briquette may be improved.

According to an example embodiment of the present invention, the coal briquette may include 1 to 10 wt% of a bio-plastic, 3 to 15 wt% of moisture, and coal in a balance amount, and the bio-plastic may include greater than or equal to 40 wt% of amylopectin and less than or equal to 60 wt% of amylose. The coal briquette according to an example embodiment of the present invention has an excellent strength due to viscoelasticity of the bio-plastic.

More specifically, 3.5 to 5 wt% of the bio-plastic, 5 to 10 wt% of the moisture, and a balance of coal may be included.

More specifically, the bio-plastic may consist of 25 to 35 wt% of the amylopectin and 65 to 75 wt% of the amylose.

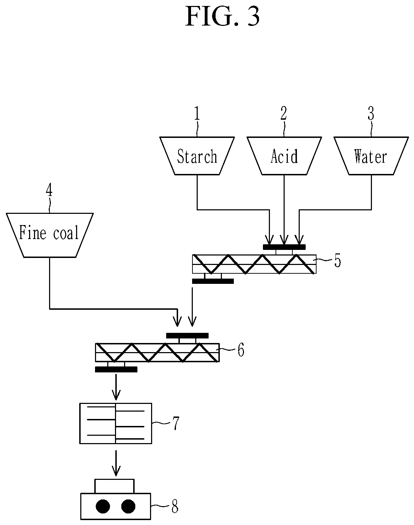

FIG. 3 schematically illustrates a coal briquette manufacturing apparatus to which the method of manufacturing the coal briquette method illustrated in FIG. 1. A structure of the coal briquette manufacturing apparatus of FIG. 3 is exemplary, and the present invention is not limited thereto. Therefore, the structure of the coal briquette manufacturing apparatus of FIG. 3 may be variously modified.

An apparatus manufacturing of the coal briquette includes bins 1, 2, and 3. The bins 1, 2, and 3 are used to supply starch, an acid aqueous solution, and water. The bins 1, 2, and 3 are connected with a binder mixer 5, and the starch, the acid aqueous solution, and the water supplied from the bins 1, 2, and 3 are mixed in the binder mixer 5. Herein, the binder mixer 5 is maintained at a temperature ranging from 5 to 50 ° C and thus may prevent transformation of the starch into a bio-plastic.

The binder mixer 5 is connected with a coal blend mixer 6, and the binder mixture is supplied in the coal blend mixer 6. In addition, the coal blend mixer 6 is supplied with fine coal from a fine coal bin 4. The coal blend mixer 6 mixes the fine coal and the binder mixture, and the mixed coal blend is supplied to a kneader 7. The coal blend mixer 6 may maintain a temperature of 55 to 65 ° C.

The coal blend supplied from the coal blend mixer 6 is stirred by the kneader 7 for particular time. Herein, the starch in the mixture may be transformed into a bio-plastic by maintaining the kneader at 65 to 200 ° C. The coal blend may be stirred for greater than or equal to 3 minutes in the kneader 7.

The coal blend stirred in the kneader 7 is supplied into a molder 8 and molded into a coal briquette. The molder 8 may be operated at greater than or equal to - 5 ° C. Specifically, the molder 8 may be operated at room temperature.

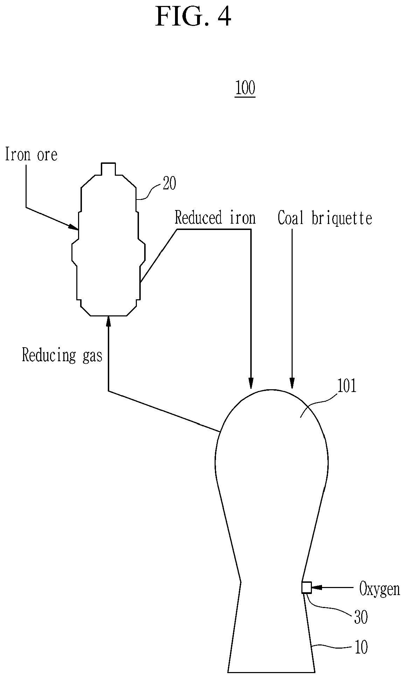

FIG. 4 schematically illustrates an apparatus 100 for manufacturing molten iron using the coal briquettes manufactured in FIG. 1. A structure of the apparatus 100 for manufacturing molten iron of FIG. 4 is exemplary, and the present invention is not limited thereto. Therefore, the structure of the apparatus 100 for manufacturing molten iron of FIG. 4 may be variously modified.

The apparatus 100 for manufacturing molten iron of FIG. 4 includes a melting gasification furnace 10 and a reduction furnace 20. In addition, it may include other devices as needed. Iron ore is charged into the reduction furnace 20 and then reduced. The iron ore charged into the reduction furnace 20 is dried in advance and then passed through the reduction furnace 20 such that reduced iron is manufactured. The reduction furnace 20 is a packed-bed reduction furnace and receives the reducing gas from the melting gasification furnace 10 to form a packed bed therein.

The coal briquette manufactured by the method of FIG. 1 is charged in to the melting gasification furnace 10 and thus a coal-packed bed is formed in the melting gasification furnace 10. A dome part 101 is provided in an upper portion of the melting gasification furnace 10. That is, a space that is wider than other portions of the melting gasification furnace 10 is formed, and high-temperature reducing gas exists in the space. Thus, the coal briquettes charged into the dome part 101 can be easily differentiated by the high-temperature reducing gas. However, coal briquettes manufactured by the method of FIG. 1 have high hot strength, and thus the coal briquettes are not differentiated at the dome part of the melting gasification furnace 10 and fall to the bottom of the melting gasification furnace 10. The char generated from thermal decomposition of coal briquette moves to the bottom of the melting gasification furnace 10 and then exothermically reacts with oxygen supplied through a tuyere 30. As a result, the coal briquette may be used as a heat source that maintains the melting gasification furnace 10 at a high temperature. Meanwhile, since char provides ventilation, a large amount of gas generated from the bottom of the melting gasification furnace 10 and reduced iron supplied from the reduction furnace 20 may more easily and uniformly pass through the coal-packed bed the melting gasification furnace 10.

In addition to the coal briquette, lump carbon ash or coke may be charged into the melting gasification furnace 10 as needed. The tuyere 30 is provided in an exterior wall of the melting gasification furnace 10 for injection of oxygen. Oxygen is injected into the coal-packed bed such that a combustion zone is formed. The coal briquette is combusted in the combustion zone to generate the reducing gas.

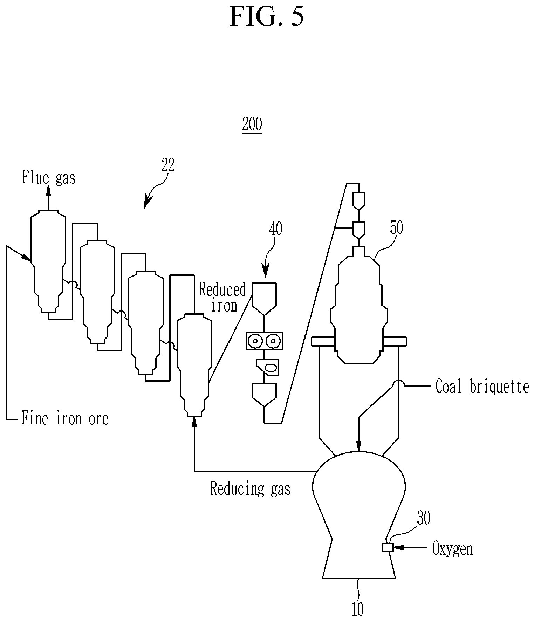

FIG. 5 schematically illustrates another apparatus 200 for manufacturing molten iron using the coal briquette manufactured in FIG. 1. A structure of the apparatus 200 for manufacturing molten iron of FIG. 5 is an exemplarily structure, and the present invention is not limited thereto. Therefore, the structure of the apparatus 200 for manufacturing molten iron of FIG. 5 may be variously modified. The structure of the apparatus 200 for manufacturing molten iron of FIG. 5 is similar to the structure of the apparatus 100 for manufacturing molten iron of FIG. 4, and therefore like reference numerals designate like elements in the molten iron production apparatus 100 of FIG. 4, and a detailed description thereof will be omitted.

As shown in FIG. 5, the apparatus 200 for manufacturing molten iron includes a melting gasification furnace 10, a reduction furnace 22, a reduced iron compression device 40, and compressive reduced iron storage bath 50. Herein, the compressive reduced iron storage bath 50 may be omitted.

The manufactured coal briquette is charged into the melting gasification furnace 10. Herein, the coal briquette generates a reducing gas in the melting gasification furnace 10 and the generated reducing gas is supplied to the fluidized-bed reduction furnace. Fine iron ores are supplied to a plurality of reduction furnaces 22 having fluidized beds and fluidized by a reducing gas supplied to the reduction furnaces 22 from the melting gasification furnace 10 such that reduced iron is manufactured. The reduced iron is compressed by the reduced iron compression device 40 and stored in the compression reduced iron storage bath 50. The compressed reduced iron is charged into the melting gasification furnace 10 from the compression reduced iron storage bath 50 and then molten in the melting gasification furnace 10. The briquette coal is supplied to the melting gasification furnace 10 and converted into char having ventilation, and as a result, a large amount of gas generated at the bottom of the melting gasification furnace 10 and the compressed reduced iron more easily and uniformly pass through a coal-packed bed in the melting gasification furnace 10, such that molten iron with high quality may be provided.

Hereinafter, the present invention will be described in further detail with reference to experimental examples. The experimental examples are used only to illustrate the present invention, and are not meant to be restrictive.

### Example 1: Viscoelasticity Test of Bio-plastic depending on pH

704 g of starch, 793 g of water, and 70.4 g of a 5 wt% acid aqueous solution (acetic acid) were mixed to prepare each binder mixture of pH 3.0, 4.0, 5.0, and 6.0. For comparison, another binder mixture of pH 7.0 was prepared without the acid aqueous solution. Subsequently, each binder mixture was heated up to 70 ° C to manufacture a bio-plastic.

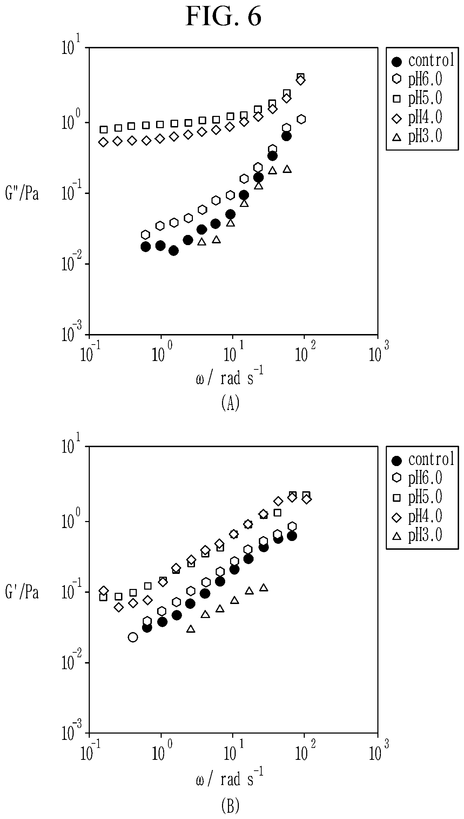

A storage modulus (G') and a loss modulus (G") of each binder mixture depending on pH were measured, and the results are shown in FIG. 6.

### Example 2: Viscoelasticity Test of Bio-plastic depending on a Kind of Acid

The same experiment as that of Example 1 was performed by replacing the acid with citric acid, lactic acid, malic acid, tartaric acid, and ascorbic acid.

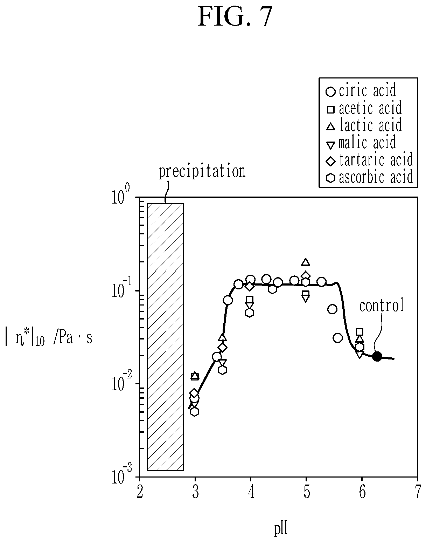

Complex viscosity (|η*|10) of each bio-plastic depending on a kind of acid and pH of a binder mixture was measured, and the results are shown in FIG. 7.

### Experimental Example 1

16 kg of coal having average properties and greater than or equal to about 90 % of a particle having a diameter ranging from less than or equal to 3 mm was prepared as fine coal (less than or equal to 10 wt% of a moisture content).

A binder mixture was prepared by mixing starch, water, and a 5 wt% acetic acid aqueous solution according to a mixing ratio shown in Table 2. The prepared binder mixture was maintained at 45 ° C.

The fine coal and about 1.5 kg of the binder mixture were put in a mixer and mixed for 3 minutes by adjusting an internal temperature of the mixer at 60 ° C and then, put in a kneader and treated for 10 minutes by adjusting an internal temperature of the kneader at 70 ° C.

The obtained coal blend is compressed with a roll press to manufacture a coal briquette having a briquette shape and a size of 64.5 mm X 25.4 mm X 19.1 mm. A compressive strength and a drop strength of the coal briquette were measured according to the following evaluation method.

The coal briquette according to Experimental Example 1 is pulverized. The pulverized coal briquette is well stirred in water for about one day. Then, the stirred mixture is filtered to separate coal from a solvent. The solvent is 10 % concentrated through a rotary evaporation. Then, an iodine solution is dropped thereinto.

A UV Spectrum is used to calculate a color ratio. A result of analyzing a bio-plastic in the coal briquette, 70 wt% of amylase and 30 wt% of amylpectin were included.

### Experimental Example 2

16 kg of coal having average properties and greater than or equal to 90 % of a particle having diameter of less than or equal 3 mm was prepared as fine coal.

Starch, water, and a 5 wt% acetic acid aqueous solution were mixed in a ratio shown in Table 2 to prepare a binder mixture. The binder mixture was maintained at 45 ° C.

The fine coal and about 1.5 kg of the binder mixture were put in a mixer and mixed for 3 minutes by adjusting an internal temperature of the mixer into 60 ° C and then, put in a kneader and treated for 15 minutes by adjusting an internal temperature of the kneader into 70 ° C.

The obtained coal blend was compressed with a roll press and made into a coal briquette having a briquette shape and a size of 64.5 mm X 25.4 mm X 19.1 mm. A compressive strength and a drop strength of the coal briquette were measured according to the following method.

### Comparative Example 1

16 kg of coal having average properties and a particle diameter of less than or equal to 3 mm was prepared as fine coal.

CaO and molasses were mixed in a ratio shown in Table 2, and about 1.5 kg of the obtained mixture was mixed with the fine coal.

The obtained coal blend was compressed with a roll press to manufacture a coal briquette having a briquette shape and a size of 64.5 mm X 25.4 mm X 19.1 mm. A compressive strength and a drop strength of the coal briquette were measured according to the following method.

### Comparative Example 2

16 kg of coal having average properties and a particle diameter of less than or equal to 3 mm was prepared as fine coal.

Starch, water, a 5 wt% acetic acid aqueous solution, and CaO were mixed according to a ratio shown in Table 2 to prepare a binder mixture. The binder mixture was maintained at 45 ° C.

The fine coal and about 1.5 kg of the binder mixture were put in a mixer and mixed for 3 minutes by adjusting an internal temperature of the mixer into 60 ° C and then, put in a kneader and treated for 15 minutes by adjusting an internal temperature of the kneader into 70 ° C.

The obtained coal blend was compressed with a roll press to manufacture a coal briquette having a briquette and a size of 64.5 mm X 25.4 mm X 19.1 mm. A compressive strength and a drop strength of the coal briquette were measured in the following evaluation method.

### Comparative Example 3

16 kg of coal having average properties and a particle diameter of less than or equal to 3 mm was prepared as fine coal.

Starch and water were mixed according to a ratio shown in Table 2 to prepare a binder mixture.

The fine coal and about 1.5 kg of the binder mixture were put in a mixer and mixed for 3 minutes by adjusting an internal temperature of the mixer into 50 °C and then, put in a kneader and treated for 8 minutes by adjusting an internal temperature of the kneader into 90 °C.

The obtained coal blend was compressed with a roll press to manufacture a coal briquette having a briquette shape and a size of 64.5 mm X 25.4 mm X 19.1 mm. A compressive strength and a drop strength of the coal briquette were measured according to the following evaluation method.

### Compression Strength Evaluation Experiment

Thirty coal briquettes according to Experimental Examples 1 and 2 and Comparative Examples 1 to 3 were respectively fixed at the bottom immediately and after dried at room temperature for one hour, at room temperature for 24 hours, at 90 ° C for 10 minutes, or at 150 ° C for 10 minutes, and a maximum load was measured by compressing the coal briquettes from top at a constant speed until broken and then, averaged.

### Drop Strength Evaluation Experiment

The coal briquettes according to Experimental Examples 1 and 2 and Comparative Examples 1 to 3 were respectively 4 times or 8 times dropped from 50 m high to the ground at room temperature after one hour and at room temperature after 24 hours, and then, a ratio of a weight of the coal briquette maintaining a particle diameter of greater than or equal to 20 mm relative to an entire weight of the coal briquette was obtained as a percentage.

### Experiment Result

The experiment results of the coal briquettes according to Experimental Examples 1 and 2 and Comparative Examples 1 to 3 are summarized and shown in Table 3.

**(Table 2)**

| | | | Comparative Example 1 | Experimental Example 1 | Experimental Example 2 | Comparative Example 2 | Comparative Example 3 |
|---|---|---|---|---|---|---|---|
| Blending ratio (weight ratio) | Bio - plastic | Water | 0 | 2.8 | 3.9 | 3.9 | 3.9 |
| | | Starch | 0 | 2.2 | 3.1 | 3.1 | 3.1 |
| | | 5 wt% acid | 0 | 0.22 | 0.31 | 0.62 | 0 |
| CaO | | | 3 | 0 | 0 | 3 | 0 |
| Molasses | | | 10 | 0 | 0 | 0 | 0 |
| Mixer stay temperature (° C) | | | - | 60 | 60 | 60 | 60 |

**(Table 3)**

| | | | Comparative Example 1 | Experimental Example 1 | Experimental Example 2 | Comparative Example 2 | Comparative Example 3 |
|---|---|---|---|---|---|---|---|
| Compression strength (Kgf) | Immediately | | 28.9 | 22.3 | 27.6 | 13.1 | 13.7 |
| | room temperature for 1 hour | | 43.2 | 32.3 | 43.7 | 15.1 | 18.1 |
| | room temperature for 24 hours | | 45.2 | 51.4 | 52.6 | 30.2 | 35.1 |
| | 90° C for 10 minutes | | 60.4 | 80 | 110 | 60 | 80 |
| | 150° C for 10 minutes | | 60.4 | 110 | 150 | 110 | 110 |
| Drop strength (%) | 4 times | 1 hour | 90.5 | 78.5 | 95.5 | 15 | 18 |
| | | 24 hours | 85.5 | 94.6 | 98.4 | 20.2 | 25 |
| | 8 times | 1 hour | 75.5 | 54.4 | 77.9 | 2.3 | 5 |
| | | 24 hours | 65.5 | 75.2 | 79.5 | 5.1 | 10 |

As shown in Table 3, the coal briquettes according to Experimental Examples were equivalent or excellent compared with the conventional coal briquette using molasses and CaO according to Comparative Example 1 and showed much excellent strength compared with the coal briquettes according to Comparative Examples 2 and 3. Particularly, the coal briquettes according to Experimental Examples were excellent in terms of immediate strength.

The present invention is not limited to the example embodiments and may be embodied in various modifications, and it will be understood by a person of ordinary skill in the art to which the present invention pertains that the present invention may be carried out through other specific embodiments without modifying the technical idea or essential characteristics thereof. Therefore, the aforementioned embodiments should be understood to be exemplary but not limiting the present invention in any way.

### <Description of Symbols>

1-4. bin
5. binder mixer
6. coal blend mixer
7. kneader
8. molder
10. melting gasification furnace
20, 22. reduction furnace
30. tuyere
40. reduced iron compression device
50. compressive reduced iron storage bath
100, 200. apparatus for manufacturing molten iron
101. dome part

## Claims

1. A method of manufacturing a coal briquette to be rapidly heated by being charged in a dome part of a melting gasification furnace in an apparatus for manufacturing molten iron,
the apparatus comprising
the melting gasification furnace in which reduced iron is charged, and
a reduction furnace connected to the melting gasification furnace and providing reduced iron,
wherein the method includes
providing fine coal,
preparing a binder mixture by mixing starch, an acid aqueous solution, and water;
preparing a coal blend by mixing the fine powder and the binder mixture; and
manufacturing coal briquettes by molding the coal blend.

2. The method of manufacturing the coal briquette of claim 1, wherein
in the step of preparing the binder mixture, 20 to 60 wt% of the starch, 0.01 to 1 wt% of the acid aqueous solution, and a balance of water based on 100 wt% of the binder mixture are mixed.

3. The method of manufacturing the coal briquette of claim 1, wherein
a concentration of the acid aqueous solution is 1 to 10 wt%.

4. The method of manufacturing the coal briquette of claim 1, wherein
in the step of preparing the binder mixture, 40 to 55 wt% of the starch, 0.01 to 0.5 wt% of the acid aqueous solution, and a balance of water based on 100 wt% of the binder mixture are mixed.

5. The method of manufacturing the coal briquette of claim 1, wherein
the acid aqueous solution includes one or more of citric acid, acetic acid, lactic acid, malic acid, tartaric acid, and ascorbic acid.

6. The method of manufacturing the coal briquette of claim 1, wherein binder mixture has pH 3 to 6.

7. The method of manufacturing the coal briquette of claim 1, wherein
in the step of preparing the coal blend, 90 to 99 wt% of the fine coal and 1 to 10 wt% of the binder mixture based on 100 wt% of the coal blend are mixed.

8. The method of manufacturing the coal briquette of claim 1, wherein
in the step of preparing the coal blend, 95 to 98 wt% of the fine coal and 2 to 5 wt% of the binder mixture based on 100 wt% of the coal blend are mixed.

9. The method of manufacturing the coal briquette of claim 1, wherein
the step of preparing the coal blend is performed at a temperature of 55 to 200° C.

10. The method of manufacturing the coal briquette of claim 1, wherein
the step of preparing the coal blend includes a first mixing step at a temperature of 55 to 65° C and a second mixing step at a temperature of 65 to 200° C after the first mixing step.

11. The method of manufacturing the coal briquette of claim 1, wherein
the method further includes drying coal briquette at 100 to 200° C for 10 to 20 minutes after preparing the coal briquette.

12. A coal briquette to be rapidly heated by being charged in a dome part of a melting gasification furnace in an apparatus for manufacturing molten iron, the apparatus comprising
the melting gasification furnace in which reduced iron is charged, and
a reduction furnace connected to the melting gasification furnace and providing reduced iron,
wherein the coal briquette includes 1 to 10 wt% of a bio-plastic, 3 to 15 wt% of moisture, and a balance of coal, and
the bio-plastic consists of 40 wt% or less of amylopectin and 60 wt% or greater of amylose.

13. The coal briquette of claim 12, wherein
the coal briquette includes 3.5 to 5 wt% of the bio-plastic, 5 to 10 wt% of the moisture, and a balance of the coal.

14. The coal briquette of claim 12, wherein
the bio-plastic consists of 25 to 35 wt% of amylopectin and 65 to 75 wt% of the amylose.
